# EUROPEAN PATENT SPECIFICATION

(11) **EP 3 345 824 B1**
(45) Date of publication and mention of the grant of the patent: **18.03.2020**
(21) Application number: 16841892.9
(22) Date of filing: 31.08.2016
(51) Int. Cl.: B63H 5/16, B63B 1/08

(54) **SHIP AND STERN SHAPE HAVING STERN DUCT**
SCHIFF- UND HECKFORM MIT ZUSTROMDÜSE
NAVIRE ET FORME DE POUPE AYANT UN CARÉNAGE DE POUPE

(30) Priority: 31.08.2015 JP 2015170995
(43) Date of publication of application: 11.07.2018
(73) Proprietor: National Institute of Maritime, Port and Aviation Technology, Tokyo 181-0004 (JP)
(72) Inventor: ICHINOSE, Yasuo, Mitaka-shi, Tokyo 181-0004 (JP); KASAHARA, Yoshikazu, Mitaka-shi Tokyo 181-0004 (JP); KANEKO, Azumi, Mitaka-shi Tokyo 181-0004 (JP); FUKASAWA, Ryohei, Mitaka-shi Tokyo 181-0004 (JP); KUME, Kenichi, Mitaka-shi Tokyo 181-0004 (JP); KAWASHIMA, Hideki, Mitaka-shi Tokyo 181-0004 (JP); SAKAMOTO, Nobuaki, Mitaka-shi Tokyo 181-0004 (JP); FUJISAWA, Junichi, Mitakawa-shi Tokyo 181-0004 (JP); OHBA, Hiroki, Mitaka-shi Tokyo 181-0004 (JP); WAKO, Daisuke, Mitaka-shi Tokyo 181-0004 (JP)
(74) Representative: Körfer, Thomas
(86) International application number: PCT/JP2016/075454
(87) International publication number: WO 2017/038862

(56) References cited:
- DE-A1- 3 620 540
- JP-A- S5 253 387
- JP-A- 2006 347 285
- JP-A- 2008 137 462
- JP-A- 2008 137 462
- JP-A- 2015 116 850
- JP-A- 2015 127 179
- JP-U- S59 128 498
- JP-U- S63 151 396
- JP-Y2- H0 450 238
- KR-A- 20120 136 072
- KR-A- 20120 136 072
- KR-A- 20130 031 552
- KR-A- 20140 135 498
- JIL-PYO OK: "Power Savings by Wake Equalizing Ducts?", SHIP TECHNOLOGY RESEARCH, vol. 52, no. 1, 29 January 2015 (2015-01-29), pages 34-51, XP055553323, ISSN: 0937-7255, DOI: 10.1179/str.2005.52.1.004

## Description

### [TECHNICAL FIELD]

The present invention relates to a stern shape having a stern duct applied to a stern portion of a ship's hull which is driven by a propeller, and to a vessel having the stern shape.

### [BACKGROUND TECHNIQUE]

As one of energy-saving apparatuses in vessels, there is one having a duct-shaped energy-saving appendage attached to a stern portion of a ship's hull.

To prevent separation of flow generated in a boundary layer range in formation outer surfaces of annular nozzles, for example, patent document 1 discloses a machine way apparatus in which annular nozzles are arranged in front of a screw in a horizontal direction at intervals of not more than a diameter of the screw, and a vessel shell plating in front of the annular nozzles is provided with a guide blade.

To increase the propulsion efficiency, patent document 2 discloses a water-flow guide plane of a stern in which a barycenter of a cross section surrounded by annular nozzles disposed in front of a propeller while keeping at horizontal distances from the water-flow guide plane to a diameter of the propeller is located above an axis of the propeller.

To obtain an energy-saving effect, patent document 3 discloses a duct apparatus of a vessel having a laterally long semicylindrical duct and a stay connected to a lower end of the semicylindrical duct.

To enhance an energy-saving effect and to reduce costs, patent document 4 discloses a duct apparatus of a vessel having a semicylindrical duct and a connection plate connected to a lower end of the semicylindrical duct.

To enhance propulsion performance of a vessel, patent document 5 discloses a propulsion performance-enhancing apparatus of a vessel in which its duct is formed into a substantially cylindrical shape or an elliptic cylindrical shape including a laterally long cylindrical shape.

Further, to reduce resistance of a ship's hull and to uniform flow field of a stern, patent document 6 suggests a technique which makes it possible to employ, as a shape of a ring-shaped structure corresponding to a duct, not only a shape forming a portion of a circle but also a shape of an elliptic shape, a linear shape or a combination thereof.

### [PRIOR ART DOCUMENTS]

### [PATENT DOCUMENTS]

[Patent Document 1] Japanese Patent Application Laid-open No.H4-230486
[Patent Document 2] Japanese Patent Application Laid-open No.S58-194691
[Patent Document 3] Japanese Patent Application Laid-open No.2015-127179
[Patent Document 4] Japanese Patent Application Laid-open No.2008-137462
[Patent Document 5] Microfilm of Japanese Utility Model Application No.S62-044176 (Japanese Utility Model Application Laid-open No.S63-151396)
[Patent Document 6] Japanese Patent Application Laid-open No.S52-053387

### [SUMMARY OF THE INVENTION]

### [PROBLEM TO BE SOLVED BY THE INVENTION]

According to patent document 1, it is necessary to provide the guide blade in front of the annular nozzle, and this configuration increases costs and labor.

According to patent document 2, the annular nozzle is composed of two semiannular shells which are separated from each other at a separation plane, and the structure becomes complicated.

Patent documents 3 and 4 do not disclose a shape in which a rear edge of a duct body has a parallel part at a central portion of an upper portion from which a semicircle substantially centering on an axis of a propeller is offset toward both left and right sides, and do not numerically prescribe a width of the parallel part in a lateral horizontal direction. Hence, it is not possible to further increase a thrust direction component of a ship's hull.

Patent document 5 discloses a configuration that an essential portion of the duct is provided at a position lower than an axial position of the propeller, and does not disclose that the rear edge of the duct body has the shape including the parallel part at the central position of the upper portion in which the semicircle centering on the substantially central portion of the axis of the propeller is offset toward both the left and right sides, and do not numerically prescribe a width of the parallel part in a laterally horizontal direction. Hence, separation is prone to be generated below the axis of the propeller, it is difficult to obtain a thrust in a longitudinal direction of the vessel, and it is not possible to further increase a thrust direction component of a ship's hull.

Patent document 6 does not suggest that the rear edge of the duct body has the shape including the parallel part at the central position of the upper portion in which the semicircle centering on the substantially central portion of the axis of the propeller is offset toward both the left and right sides, and do not numerically suggest a width of the parallel part in a lateral horizontal direction. Hence, it is not possible to further increase a thrust direction component of a ship's hull.

Further, an energy-saving effect of the duct-shaped energy-saving appendage becomes extremely small in some cases due to an applied ship's hull shape, but in any of patent documents 1 to 6, the applied ship's hull shape is not taken into account. That is, with respect to the ship's hull shape having the small energy-saving effect caused by the duct, transport efficiency cannot largely be improved. DE3620540A1 discloses a semi-cylindrical stern duct. JIL-PYO OK describes in "Power Savings by Wake Equalizing Ducts?" the possibility of introducing a shift into a wake equalizing duct.

Thereupon, it is an object of the present invention to obtain the maximum transport efficiency with an effect of interference between a shape of a ship's hull and a propeller by the shape of the ship's hull (shape of stern) having a duct in front of the propeller of the vessel provided with a V stern shape.

### [MEANS FOR SOLVING THE PROBLEM]

A shape of a stern having a stern duct corresponding to description of claim 1 including a propeller provided on a stern portion of a ship's hull, and the stern duct mounted in front of the propeller, wherein the ship's hull has a V stern shape, a duct body of the stern duct is semicylindrical in shape, a rear edge of the duct body has a shape including a parallel part at a central position of its upper portion from which a semicircle substantially centering on an axis of the propeller is offset toward both left and right sides when the ship's hull is forwardly viewed from a rear portion thereof, an inner radius of the semicircle is set in a range of 40% or more and 80% or less of a radius of the propeller, and a width of the parallel part in a lateral horizontal direction is set to 5% or more and 25% or less of a diameter of the propeller.

According to the invention described in claim 1, the duct body is semicylindrical in shape and the inner radius of the semicircle is set within a scope of 40% or more and 80% or less of the radius of the propeller. According to this, as compared with the conventional annular duct, separation of a lower portion of the axis of the propeller is reduced, and it becomes easy to obtain a thrust in the longitudinal direction of the vessel. Further, in a V stern shape where a vertical vortex is not formed, if the duct body is formed into a shape provided at its central portion of the upper portion with a parallel part and if a width of the parallel part is appropriately set while taking a relation between the width of the parallel part and the diameter of the propeller into account, even in the case of the V stern shape having a small energy-saving effect due to the duct, it is possible to largely improve the transport efficiency.

The present invention described in claim 2 is characterized in that the V shaped stern has such a shape that a tangent angle formed between a tangent of the ship's hull and a horizontal line which passes through the axis of the propeller of the ship's hull at a 10% front position of the hull length from the after perpendicular is a division angle or less which is defined per a fullness of the ship's hull.

According to the invention described in claim 2, it is possible to distinguish between a V stern shape (V vessel shape) and a U stern shape (U vessel shape) in accordance with a fullness, and it is possible to reliably discriminate a stern shape which is effective when a stern duct is applied.

The present invention described in claim 3 is characterized in that the division angle is determined based on the following Table 1 which prescribes a ship shape having the V stern shape.

According to the invention described in claim 3, it is possible to more easily distinguish between the V vessel shape and the U vessel shape in accordance with the fullness.

Numeric values in Table 1 are for more easily distinguishing the fullness and the relation between the V vessel shape and the U vessel shape. In reality, values existing between the numeric values can be applied as both the fullness and the division angle.

The present invention described in claim 4 is characterized in that a distance between the rear edge of the duct body and a front edge of the propeller is set to 1.0% or more and less than 50% of a diameter of the propeller.

According to the invention described in claim 4, by shortening the distance between the rear edge of the duct body and the front edge of the propeller, it is possible to enhance the interference effect with respect to the propeller and to further enhance the propulsion efficiency.

The present invention described in claim 5 is characterized in that a lower end of the duct body is set lower than the axis of the propeller and higher than an axial lower end of the propeller.

According to the invention described in claim 5, it is possible to largely reduce the separation generated in a gap between the ship's hull and the lower end of the duct body, and to obtain large propulsion performance. Further, when the rudder is provided with an energy-saving appendage, an excellent influence is given to the energy-saving appendage.

The present invention described in claim 6 is characterized in that a horizontal distance in a longitudinal direction of the ship's hull between a lower portion of the rear edge of the duct body and the ship's hull is set into a range from -15% or more to less than 50% of a diameter of the propeller under a condition that the horizontal distance is a positive value when the rear edge of the duct body exists in front of the ship's hull.

According to the invention described in claim 6, it is possible to further reduce the separation generated in the gap between the ship's hull and the lower end of the duct body, and to obtain larger propulsion performance.

The present invention described in claim 7 is characterized in that the duct body is trapezoidal in shape whose upper bottom is longer than its lower bottom when the duct body is viewed from side.

According to the invention described in claim 7, it is possible to prevent an attack angle between the stern vertical vortex and the duct body from becoming relatively deteriorated and from becoming resistance, and it is possible to earn a wake gain of the lower end while keeping a thrust reduction coefficient which is higher than that of the conventional annular duct.

The present invention described in claim 8 is characterized in that a cross section of the duct body has a wing shape, a wing cord length of the wing shape is set such that a lower portion of the duct body is shorter than its upper portion.

According to the invention described in claim 8, it is possible to prevent an attack angle between the stern vertical vortex and the blade from becoming relatively deteriorated and from becoming resistance, and it is possible to earn a wake gain of the lower end while keeping a thrust reduction coefficient which is higher than that of the conventional annular duct.

The present invention described in claim 9 is characterized in that a ratio the wing cord length of the lower portion of the duct body to the wing cord length of the upper portion is set to 1/2 or more and less than 1.

According to the invention described in claim 9, it is possible to more reliably prevent an attack angle between the stern vertical vortex and the blade from becoming relatively deteriorated and from becoming resistance, and it is possible to earn a wake gain of the lower end while keeping a thrust reduction coefficient which is higher than that of the conventional annular duct.

The present invention described in claim 10 is characterized in that the inner radius of the semicylindrical is set such that a front portion of the duct body is larger than a rear portion of the duct body.

According to the invention described in claim 10, flow at a location downstream of the duct body can be made slow, an effective wake fraction can be made small, a thrust component on the side of a front portion of the duct body can be increased, and a propulsion force can be enhanced.

The present invention described in claim 11 is characterized in that a lower end part of the duct body is provided with strut portions which support the duct body on the stern portion.

According to the invention described in claim 11, since the duct body can be mounted on the strut portions by the stern portion, it is easy to install the duct body and to place the duct body at an appropriate position with respect to the propeller.

The present invention described in claim 12 is characterized in that angles of the left and right strut portions are made different from each other such that the strut portions induce a flow moving in a direction opposite from a rotation direction of the propeller.

According to the invention described in claim 12, a flow moving in a direction opposite from the rotation direction of the propeller can be generated on a propeller surface and propulsion performance can be enhanced by a double flip effect.

The present invention described in claim 13 is characterized in that the stern shape having a stern further includes a rudder behind the propeller, wherein the rudder is provided with an energy-saving appendage which thrusts the ship's hull forward.

According to the invention described in claim 13, it is possible to further enhance the transport efficiency by the energy-saving appendage.

The present invention described in claim 14 is characterized in that a mounting position of the energy-saving appendage on the rudder in the longitudinal direction is substantially at the same level as a boss position of the propeller.

According to the invention described in claim 14, a thrust can easily be obtained at this mounting position, the energy-saving appendage can easily exhibit the effect and high propulsion efficiency can be achieved.

In the vessel described in claim 15, the ship's hull is provided with a stern shape having the stern duct described in any one of claims 1 to 12.

According to the invention described in claim 15, it is possible to provide a vessel provided with the stern shape having the stern duct including an energy-saving effect which is higher than that of the conventional technique.

### [EFFECT OF THE INVENTION]

According to the stern shape having the stern duct of the present invention, the duct body is semicylindrical in shape, the inner radius of the semicircle is set within a scope of 40% or more and 80% or less of the radius of the propeller. According to this, as compared with the conventional annular duct, separation of a lower portion of the axis of the propeller is reduced, and it becomes easy to obtain a thrust in the longitudinal direction of the vessel. Further, in a V stern shape where a vertical vortex is not formed, if the duct body is formed into a shape provided at its central portion of the upper portion with a parallel part and if a width of the parallel part is appropriately set while taking a relation between the width of the parallel part and the diameter of the propeller into account, even in the case of the V stern shape having a small energy-saving effect due to the duct, it is possible to largely improve the transport efficiency.

If the V shaped stern has such a shape that a tangent angle formed between a tangent of the ship's hull and a horizontal line which passes through the axis of the propeller of the ship's hull at a 10% front position of the hull length from the after perpendicular is a division angle or less which is defined per a fullness of the ship's hull, it is possible to distinguish between a V stern shape (V vessel shape) and a U stern shape (U vessel shape) in accordance with a fullness, and it is possible to reliably discriminate a stern shape which is effective when a stern duct is applied.

When the division angle is determined based on the following Table 1 which prescribes a ship shape having the V stern shape, it is possible to more easily distinguish between the V vessel shape and the U vessel shape in accordance with the fullness.

If a distance between the rear edge of the duct body and a front edge of the propeller is set to 1.0% or more and less than 50% of a diameter of the propeller, by shortening the distance between the rear edge of the duct body and the front edge of the propeller, it is possible to enhance the interference effect with respect to the propeller and to further enhance the propulsion efficiency.

If a lower end of the duct body is set lower than the axis of the propeller and higher than an axial lower end of the propeller,
it is possible to largely reduce the separation generated in a gap between the ship's hull and the lower end of the duct body, and to obtain large propulsion performance. Further, when the rudder is provided with an energy-saving appendage, an excellent influence is given to the energy-saving appendage.

When a horizontal distance in a longitudinal direction of the ship's hull between a lower portion of the rear edge of the duct body and the ship's hull is set into a range from -15% or more to less than 50% of a diameter of the propeller under a condition that the horizontal distance is a positive value when the rear edge of the duct body exists in front of the ship's hull, it is possible to further reduce the separation generated in the gap between the ship's hull and the lower end of the duct body, and to obtain larger propulsion performance.

If the duct body is trapezoidal in shape whose upper bottom is longer than its lower bottom when the duct body is viewed from side, it is possible to prevent an attack angle between the stern vertical vortex and the duct body from becoming relatively deteriorated and from becoming resistance, and it is possible to earn a wake gain of the lower end while keeping a thrust reduction coefficient which is higher than that of the conventional annular duct.

If a cross section of the duct body has a wing shape and a wing cord length of the wing shape is set such that an upper portion of the duct body is shorter than its lower portion, it is possible to prevent an attack angle between the stern vertical vortex and the blade from becoming relatively deteriorated and from becoming resistance, and it is possible to earn a wake gain of the lower end while keeping a thrust reduction coefficient which is higher than that of the conventional annular duct.

If a ratio the wing cord length of the lower portion of the duct body to the wing cord length of the upper portion is set to 1/2 or more and less than 1, it is possible to more reliably prevent an attack angle between the stern vertical vortex and the blade from becoming relatively deteriorated and from becoming resistance, and it is possible to earn a wake gain of the lower end while keeping a thrust reduction coefficient which is higher than that of the conventional annular duct.

If the inner radius of the semicylindrical is set such that a front portion of the duct body is larger than a rear portion of the duct body, flow at a location downstream of the duct body can be made slow, an effective wake fraction can be made small, a thrust component on the side of a front portion of the duct body can be increased, and a propulsion force can be enhanced.

If a lower end part of the duct body is provided with strut portions which support the duct body on the stern portion, the duct body can be mounted on the stern portion by the stern portion.

If angles of the left and right strut portions are made different from each other such that the strut portions induce a flow moving in a direction opposite from a rotation direction of the propeller, a flow moving in a direction opposite from the rotation direction of the propeller can be generated on a propeller surface and propulsion performance can be enhanced by an double flip effect.

If the stern shape having a stern further includes a rudder behind the propeller and the rudder is provided with an energy-saving appendage which thrusts the ship's hull forward, it is possible to further enhance the transport efficiency by the energy-saving appendage.

If a mounting position of the energy-saving appendage on the rudder in the longitudinal direction is substantially at the same level as a boss position of the propeller, a thrust can easily be obtained at this mounting position, and the energy-saving appendage can easily exhibit the effect and high propulsion efficiency can be achieved.

Further, it is possible to provide a vessel provided with the stern shape having the stern duct including an energy-saving effect which is higher than that of the conventional technique.

### [BRIEF DESCRIPTION OF THE DRAWINGS]

Fig. 1 is a schematic diagram showing a structure of a stern shape and a vessel having a stern duct according to an embodiment of the present invention;
Fig. 2 is a diagram showing the stern shape as forwardly viewing from its rear portion;
Fig. 3 is a partially sectional side view of the stern shape;
Fig. 4 is a side view of the stern duct;
Fig. 5 is a diagram showing a flow around the stern shape;
Fig. 6 is a diagram showing a propeller circle and the stern duct in a stage where the stern shape is forwardly viewed from the rear portion;
Figs. 7(a) and 7(b) are comparison diagrams of thrust when a radius of the stern duct in a V shape vessel is changed;
Figs. 8(a) and 8(b) are comparison diagrams of thrust when a radius of the stern duct in a U shape vessel is changed;
Figs. 9(a) to 9(c) are diagrams showing peripheries of the stern duct
Fig. 10 is a stern diagram (fullness of ship's hull Cb = 0.80);
Fig. 11 is a stern diagram (fullness of ship's hull Cb = 0.87);
Figs. 12(a) and 12(b) are diagrams showing a relation between a fullness and a division angle of the ship's hull (angle for discriminating between V shape vessel and U shape vessel);
Figs. 13(a) to 13(c) are a stern diagram and contour diagrams showing wakes of the U shape vessel and the V shape vessel;
Figs. 14(a) to 14(c) showing thrust of every parallel part;
Fig. 15 is a diagram showing results of integration of thrust direction components of the V shape vessel carried out for every parallel part; and
Figs. 16(a) and 16(b) are comparison diagrams for comparing flow lines flowing into the energy-saving appendage.

### [MODE FOR CARRYING OUT THE INVENTION]

A stern shape and a vessel having a stern duct according an embodiment of the present invention will be described below.

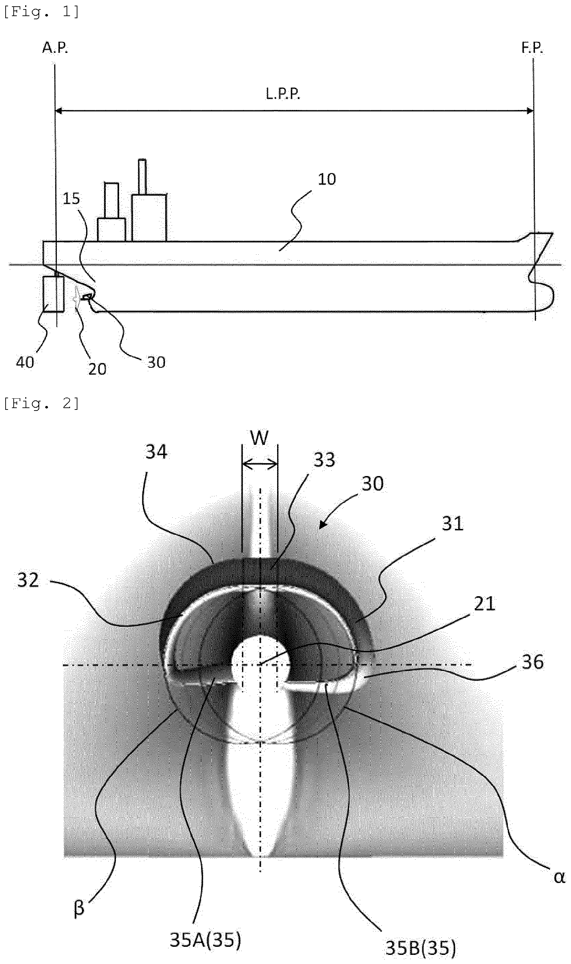

Fig. 1 is a schematic diagram showing a structure of a stern shape and a vessel having a stern duct according to an embodiment of the present invention.

The stern shape and the vessel having the stern duct according to the embodiment include a propeller 20 provided at a stern portion 15 of a ship's hull 10, a stern duct 30 mounted in front of the propeller 20, and a rudder 40 mounted behind the propeller 20. Here, "A.P." represents an after perpendicular, "F.P." represents a bow perpendicular line, and "L.P.P." represents a hull length (length between perpendicular). The ship's hull 10 has a V stern shape and this point will be described later. A vessel shape having the V stern shape is a V vessel shape.

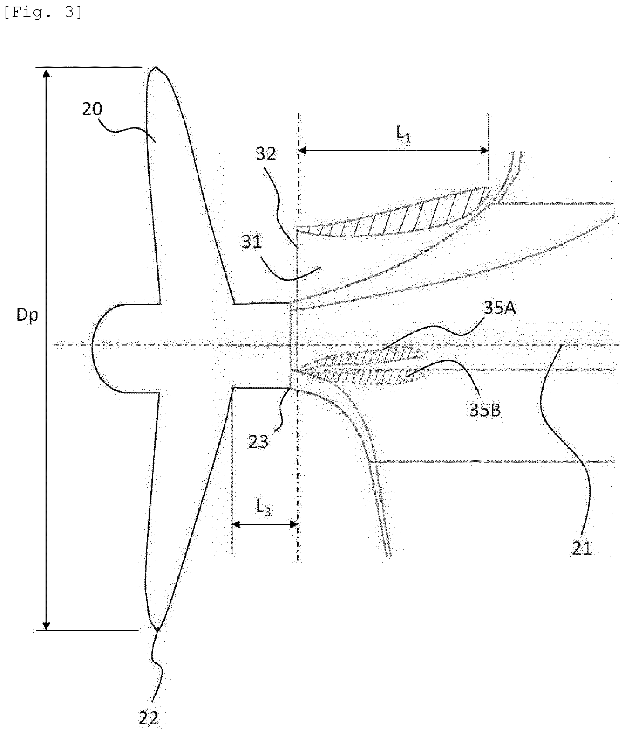

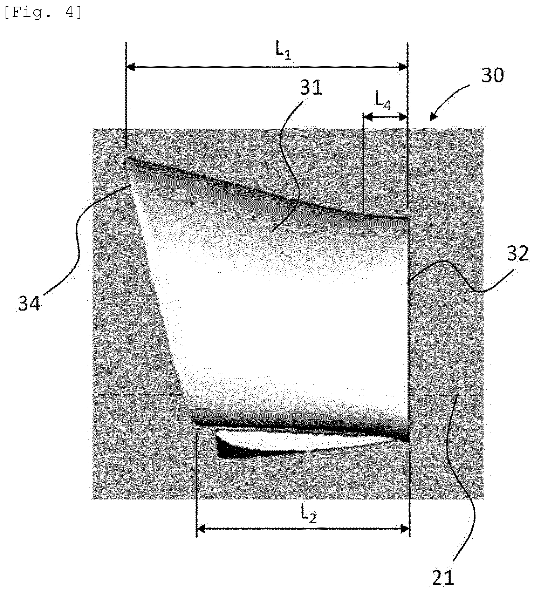

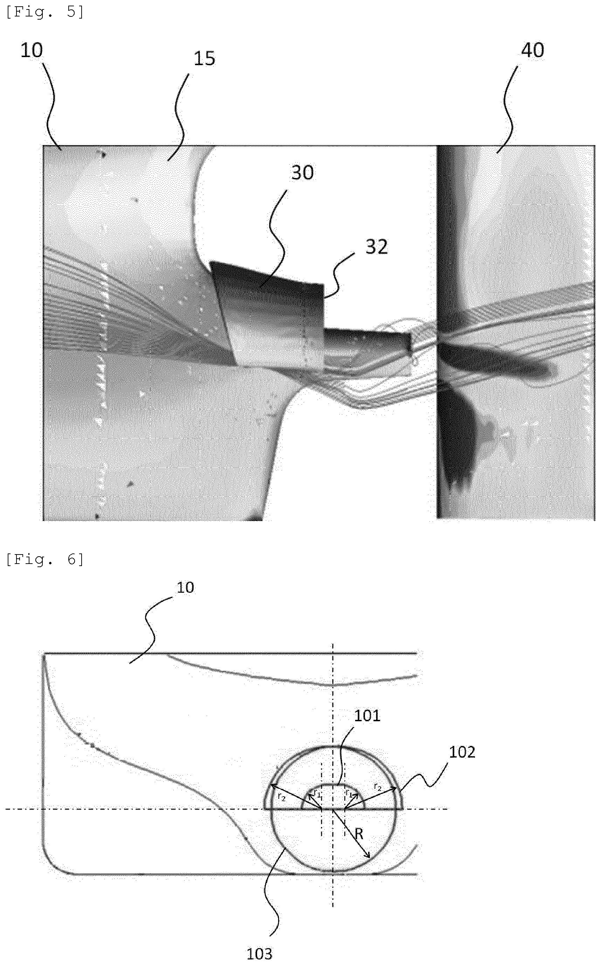

Fig. 2 is a diagram showing the stern shape as forwardly viewing from its rear portion, Fig. 3 is a partially sectional side view of the stern shape, Fig. 4 is a side view of the stern duct, and Fig. 5 is a diagram showing a flow around the stern shape.

A duct body 31 of the stern duct 30 is semicylindrical in shape. When a rear edge 32 of the duct body 31 is forwardly viewed from a rear portion of the ship's hull 10, the rear edge 32 has such a shape having a parallel part 33 located at a central portion of an upper portion of an outer shell configured by offsetting, toward laterally both sides, a semicircle substantially centering on an axis (propeller axis) 21 of the propeller 20. In Fig. 2, circles α and β show phantom inner peripheries of semicircles of the rear edge 32 of the duct body 31. The circles α and β are obtained by offsetting, toward laterally both sides, a circle substantially centering on the axis (propeller axis) 21 of the propeller 20. The duct body 31 configures the outer shell by continuously connecting the parallel part 33 with the semicircle which configures portions the circles α and β. As apparent from the fact that a lower end 36 of the duct body 31 exists below the axis (propeller axis) 21 as shown in Fig. 2, the term "semicircle" numerically includes a semicircle which is further elongated toward laterally both sides by about 30° up to 240°.

A width W of the parallel part 33 in the laterally horizontal direction (simply, "width W", hereinafter) is in a range of 5% or more and 25% or less of a diameter Dp of the propeller 20.

As shown in Figs. 3 and 4, a cross section of the duct body 31 is wing in shape which is convex inward. By utilizing a thrust direction component (thrust component) of a lift force generated by the wing shape, it is possible to enhance the thrust reduction ratio and propulsion efficiency.

When the duct body 31 is viewed sideway, the duct body 31 is trapezoidal in shape whose upper bottom is longer than the lower bottom. A wing-shaped wing cord length L₂ of the lower portion of the duct body 31 is set shorter than a wing-shaped wing cord length L₁ of the upper portion of the duct body 31. That is, a front edge 34 of the duct body 31 is formed into a tapered shape whose longitudinal length gradually becomes shorter from its upper portion toward its lower portion.

A ratio between the wing cord length L₂ of the lower portion of the duct body 31 and the wing cord length L₁ of the upper portion of the duct body 31 is set 1/2 or more and less than 1.

According to this configuration, it is possible to prevent a stern vertical vortex and an attack angle of the wing from becoming relatively deteriorated and from becoming resistance, and it is possible to earn a wake gain of the lower end while keeping a thrust reduction coefficient which is higher than that of the conventional annular duct.

The duct body 31 is trapezoidal in shape as viewed from side. The rear edge 32 on the side of the propeller 20 is perpendicular to a propeller axis 21. However, the trapezoidal shape is not limited only to this shape. The trapezoidal shape also includes one in which the rear edge 32 on the side of the propeller 20 is not perpendicular to the propeller axis 21.

An inner radius of the semicircle of the duct body 31 is set such that the inner radius of a front portion of the duct body 31 is larger that of the rear portion.

According to this configuration, a flow on the downstream-side can be made slower than that on the side of the duct body 31 to make the effective wake fraction small, a thrust component on the side of the front portion of the duct body 31 can be increased and the propulsion force can be enhanced.

As shown in Fig. 4, a portion (range L4) of the duct body 31 which is close to the rear edge 32 is made slightly opened to secure an internal wind-shape, and a portion downstream of the duct body 31 where a flow is slow is increased to further reduce the effective wake fraction.

It is preferable that the range L4 which is made slightly opened is 10% or more and 20% or less of the wing cord length L₁.

The stern duct 30 includes strut portions 35 on the lower end part of the duct body 31. The strut portions 35 support, on the stern portion 15, the duct body 31. The strut portions 35 comprise a left strut portion 35A and a right strut portion 35B. The duct body 31 can be mounted on the ship's hull 10 (stern tube and a stern tube outer shell) of the stern portion 15 by the strut portions 35. Therefore, it is easy to install the duct body 31, and to arrange the duct body 31 at an appropriate position especially with respect to the propeller 20. Further, if the lower end 36 of the duct body 31, the left strut portion 35A and the right strut portion 35B are set lower than the axis (propeller axis) 21 of the propeller 20 and set higher than an axis lower end portion 23 of the propeller 20, the separation is more reliably reduced and a desirable effect is exert on a later-described energy-saving appendage.

An angle of the left strut portion 35A and an angle of the right strut portion 35B of the strut portions 35 are made different from each other to induce a flow moving in a direction opposite from the rotation direction of the propeller 20. That is, as shown in Fig. 3, the left strut portion 35A inclines such that its front portion becomes higher than the right strut portion 35B when the duct body 31 is viewed from side.

If the angle of the left strut portion 35A and the angle of the right strut portion 35B are made different from each other to induce the flow moving in the direction opposite from the rotation direction of the propeller 20 as described above, a flow moving in the direction opposite from the rotation direction of the propeller is induced as shown in Fig. 5, and the propulsion performance can be enhanced by a double flip effect.

Since the angle of the left strut portion 35A and the angle of the right strut portion 35B are determined while taking the propulsion performance determined by the ship's hull into account, the angle of the left strut portion 35A and the angle of the right strut portion 35B can be the same or can be the same orientation as that of a camber depending upon the shape of the ship's hull.

As shown in Fig. 3, the distance L₃ between the rear edge 32 of the duct body 31 and a front edge of the propeller 20 is set to 1.0% or more and less than 50% of a diameter Dp of the propeller 20.

If the distance L₃ between the rear edge 32 of the duct body 31 and the front edge of the propeller 20 is made shorter, the interference effect between the stern duct 30 and the propeller 20 is increased and the wake gain is increased, and the propeller efficiency is increased. On the other hand, if the distance L₃ is made excessively short, a resistance component of the duct body 31 transcends and thrust reduction coefficient is deteriorated due to interference with the propeller 20. Hence, when the entire propulsion efficiency is taken into consideration, an appropriate distance L₃ can be introduced from a trade-off relation between the increase of the wake gain and the deterioration of the thrust reduction coefficient, and if the distance L₃ is in the optimal position, it is possible to further enhance the propulsion efficiency.

It is preferable that the distance L₃ is 1.0% or more and 25% or less of the diameter Dp of the propeller 20, and more preferably, 10% or more and 20% or less of the diameter Dp. If the distance L₃ is made excessively short, cavitation is prone to be generated in some cases. In such a case, if the inner radius of the semicircle of the duct body 31 is made small, it is possible to suppress the problem of generation of the cavitation.

The inner radius of the semicircle of the rear edge 32 of the duct body 31 is set within a scope of 40% or more and 80% or less of the radius of the propeller 20.

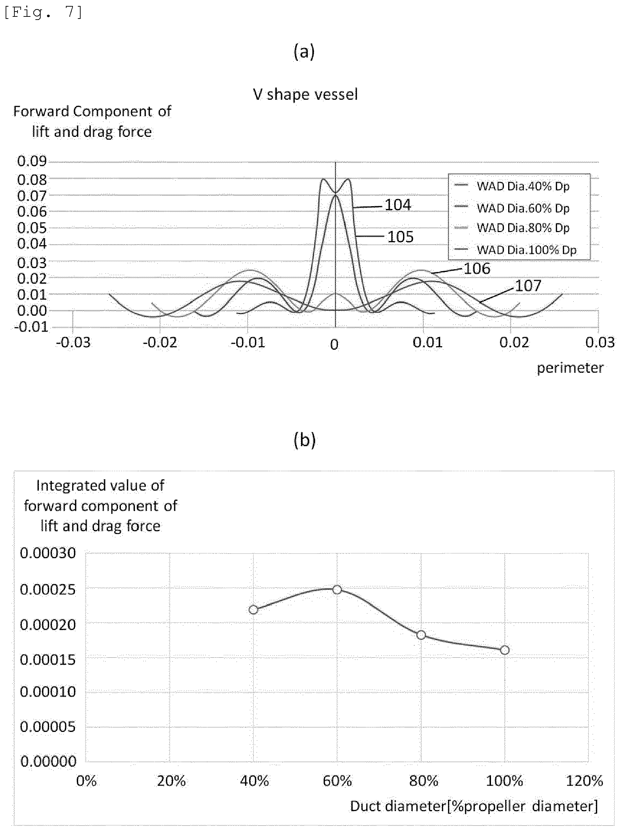

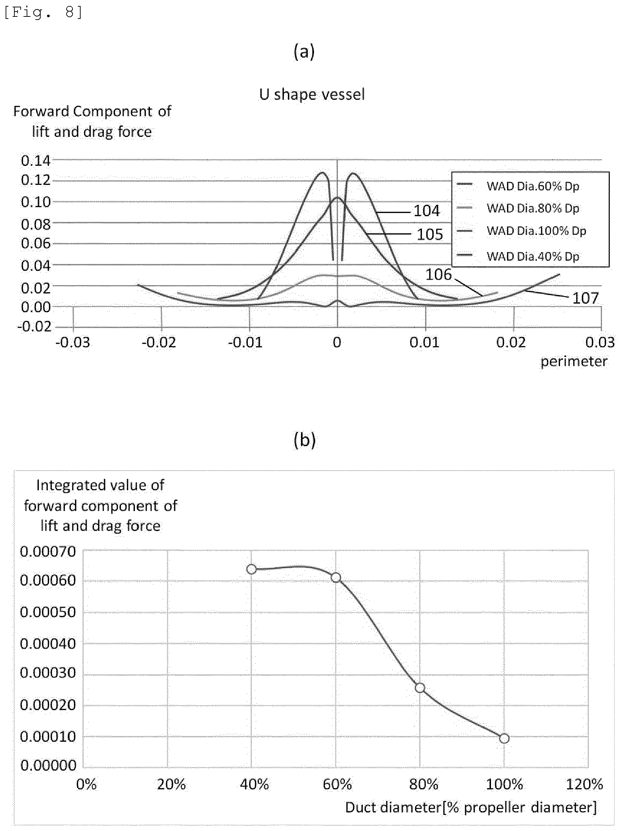

Fig. 6 is a diagram showing the propeller circle and the stern duct in a stage where the stern shape is forwardly viewed from the rear portion, and Figs. 7 and 8 are comparison diagrams of thrusts based on diameters of the stern ducts in the V shape vessel and the U shape vessel.

In Fig. 6, a semicircle 101 shows a shape of the stern duct 30 when a width W of the parallel part 33 is 10% of the diameter Dp of the propeller 20 and a radius r₁ (diameter d₁) of the rear edge 32 of the duct body 31 is 40% of a radius R (diameter Dp) of the propeller 20. A semicircle 102 shows a shape of the stern duct 30 when the width W of the parallel part 33 is 10% of the diameter Dp of the propeller 20 and the radius r₂ (diameter d₂) of the rear edge 32 of the duct body 31 is 100% of the radius R (diameter Dp) of the propeller 20. A circle 103 shows a propeller circle.

Fig. 7(a) shows a distribution of a thrust direction component of the ship's hull if the stern duct 30 when the width W of the parallel part 33 is 10% of the diameter Dp of the propeller 20 is applied to the V shape vessel (fullness of 0.87 and tangent angle of 40°) while changing the radius r (diameter d). Fig. 7(b) shows an integrated value of Fig. 7(a) per a radius r (diameter d) of the stern duct 30, and a vertical axis shows an actual thrust in the longitudinal direction of the vessel.

Fig. 8(a) shows a distribution of a thrust direction component of the ship's hull of the U shape vessel (fullness of 0.87 and tangent angle of 75°) when the width W of the parallel part 33 is slightly larger than 0% of the diameter Dp of the propeller 20 while changing the radius r (diameter d) of the stern duct 30. Fig. 8(b) shows an integrated value of Fig. 8(a) per a radius r (diameter d) of the stern duct 30, and a vertical axis shows an actual thrust in the longitudinal direction of the vessel. Detailed definitions of the V shape vessel and the U shape vessel will be described later.

In Figs. 7(a) and 8(a), a line 104 shows a thrust when the radius r (diameter d) of the rear edge 32 of the duct body 31 is 40% of the radius R (diameter Dp) of the propeller 20, a line 105 shows a thrust when the radius r (diameter d) is 60%, a line 106 shows a thrust when the radius r (diameter d) is 80% and a line 107 shows a thrust when the radius r (diameter d) is 100%.

From Figs. 7 (b) and 8 (b), it is found that it is preferable that the radius r (diameter d) of the rear edge 32 of the duct body 31 is in a range of 40% or more and 80% or less of the radius R (diameter Dp) of the propeller 20. Especially in the case of the V shape vessel, it is preferable that the radius r (diameter d) of the propeller 20 is in a range of 40% or more and 70% or less of the radius R (diameter Dp) of the propeller 20 and more preferably, in a range of 50% or more and 65% or less of the radius R (diameter Dp). In the case of the range of 50% or more and 65% or less for example, the above-described range of 10% or more and 20% or less as the distance L₃ between the rear edge 32 of the duct body 31 and the front edge of the propeller 20, it is possible to employ a range of 5% or more and 15% or less.

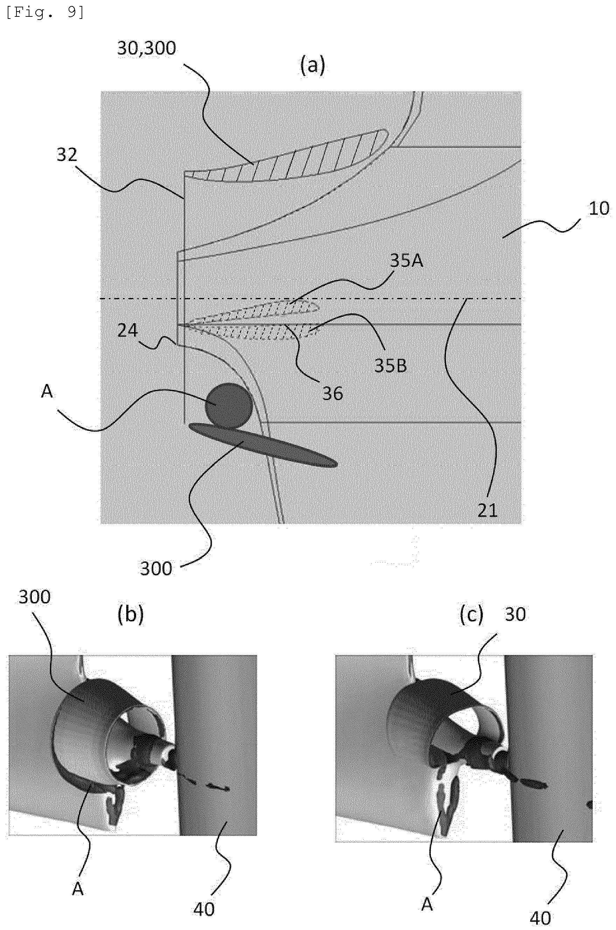

Fig. 9 (a) is a side view showing peripheries of the stern duct, Fig. 9 is a perspective view showing peripheries of the stern shape to which the conventional annular duct is applied, and Fig. 9(c) is a peripheral view showing peripheries of the stern shape to which the stern duct of the embodiment is applied.

In Figs. 9(b) and 9(c), thick color portions show portions (separation regions A) where there is no flow or flow moves reversely and become resistance. In Fig. 9(a), the lower end of the conventional annular duct 300 is virtually shown as a thin and long ellipse, and the separation regions A are shown as circles.

From Figs. 9(a) and 9(b), in the conventional annular duct 300, since the separation region A is generated between the ship's hull 10 and the lower end of the annular duct 300, it is found that the separation phenomenon is generated and resistance becomes extremely high.

Whereas, in the stern duct 30 of the embodiment, the duct body 31 is semicylindrical in shape, and the lower end 36 of the duct body 31 is set lower than the axis (propeller axis) 21 of the propeller 20 and higher than the axial lower end 23 of the propeller 20. Hence, as shown in Figs. 9(a) and 9(c), the separation generated between the ship's hull 10 and the duct body lower end 36 can largely be reduced, and large propulsion performance can be obtained.

The axial lower end 23 includes a position of the lower end of a stern tube rear edge 24 to which the axial lower end 23 of the ship's hull 10 (stern tube and stern tube outer shell) of the stern portion 15 is substantially opposed. The propeller 20 is mounted on the stern portion 15. Normally, the axial lower end 23 of the propeller 20 and the lower end of the stern tube rear edge 24 are set at the same height in many cases, but the lower end if the stern tube rear edge 24 is slightly lower than the axial lower end 23 in some cases.

A horizontal distance in the longitudinal direction of the ship's hull 10 between the lower portion of the rear edge 32 of the duct body 31 and a rear edge 24 of the stern tube 24 of the ship's hull 10 is set into a range from -15% or more to less than 50% of the diameter Dp of the propeller 20 under a condition that the horizontal distance is a positive value when the rear edge 32 of the duct body 31 exists in front of the stern tube 24 (when rear edge 32 of stern duct 30 is superposed on ship's hull 10 as viewed from side).

Basically, the horizontal distance between the lower end of the rear edge 32 and the stern tube rear edge 24 of the ship's hull 10 in the longitudinal direction is set to 0% or more and 50% or less, but when the duct body 31 is trapezoidal in shape whose upper bottom is longer than the lower bottom if the duct body 31 is viewed from side as in this embodiment, since the lower portion of the duct body 31 is short, a region where the separation is generated is small even if a portion of the lower portion of the duct body 31 protrudes rearward or the portion of the lower portion is rearwardly separated from the ship's hull 10 and is not superposed at all. Therefore, the horizontal distance may be set to -15% of the diameter Dp of the propeller 20.

As described above, if the duct body 31 is formed into the semicylindrical shape and the relation with respect to the ship's hull profile and the horizontal distance between the duct body and the ship's hull 10 are integrally designed, it is possible to eliminate the region where water does not easily flow and separation is generated, and it is possible to largely improve the resistance performance.

The width W of the parallel part 33 is designed while taking the ship shape into consideration.

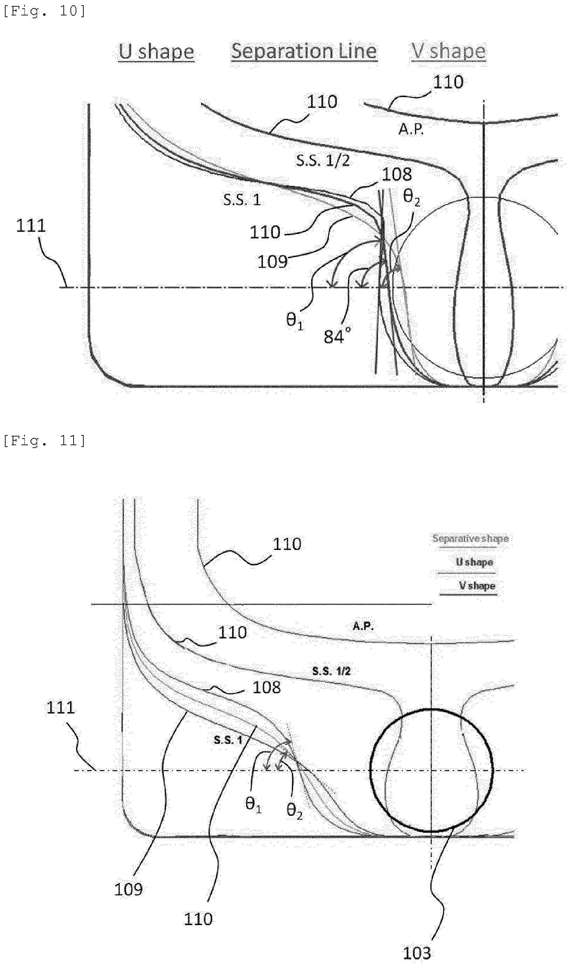

Fig. 10 is a diagram of the stern and is a sectional view of a curved surface which is formed when the ship's hull 10 is cut into rounds in the longitudinal direction (longitudinal direction of the vessel) based on an example where a fullness Cb of the ship's hull 10 is 0.80 in the embodiment. The fullness Cb is a dimensionless number which is obtained by dividing a displacement of the ship's hull 10 by a value obtained by multiplying the length of the vessel, the width of the vessel and draft.

In Fig. 10, a line 108 shows a U shape vessel and a line 109 shows the V shape vessel. A line 110 divides the U shape vessel and the V shape vessel from each other, and a line 111 is level with the propeller axis (propeller axis) 21 of the propeller 20.

Here, "A.P." shows a position of an after perpendicular which is a perpendicular line passing through a rotation center of the rudder 40, and "S.S.D" shows a position from the after perpendicular A.P. when entire the length between the perpendicular (hull length) L.P.P. is defined as 10. That is, "S.S.1" shows a 10% front position of the length between the perpendicular L.P.P. from the after perpendicular A.P.

Here, lines 108 and 109 in the positions "S.S.1/2" and the after perpendicular A.P. are omitted.

As shown in Fig. 10, when the fullness Cb of the ship's hull 10 is 0.80, if the tangent angles θ₁ and θ₂ formed between the line 111 and a tangent of the line 108 or 109 passing through a point at which the lines 108 and 109 intersect at a position "S.S.1" exceeds 84°, the ship shape is defined as U shape vessel, and if the tangent angles θ₁ and θ₂ is 84° or less, the ship shape is defined as V shape vessel. In Fig. 10, the tangent angle θ₁ of the line 108 of the U shape vessel is 92°, and the tangent angle θ₂ of the line 109 of the V shape vessel is 82°.

Fig. 11 shows a case where the fullness Cb of the ship's hull 10 in the embodiment is 0.87. Fig. 11 is a diagram of the stern and is a sectional view of a curved surface formed when the ship's hull 10 is cut into rounds in the longitudinal direction (longitudinal direction of vessel). Substantially the same description as described in Fig. 10 will be omitted.

As shown in Fig. 11, when the fullness Cb of the ship's hull 10 is 0.87, if the tangent angles θ₁ and θ₂ formed between the line 111 and a tangent of the line 108 or 109 passing through a point at which the lines 108 and 109 intersect at a position "S.S.1" exceeds 57°, the ship shape is defined as U shape vessel, and if the tangent angles θ₁ and θ₂ is 57° or less, the ship shape is defined as V shape vessel. In Fig. 11, the tangent angle θ₁ of the line 108 of the U shape vessel is 75°,and the tangent angle θ₂ of the line 109 of the V shape vessel is 40°.

As described above, the V shape vessel and the U shape vessel are distinguished from each other and defined by the fullness Cb of the ship's hull 10 and the tangent angle formed between the tangent of the ship's hull 10 and the horizontal line which passes through the propeller axis (axis) 21 of the ship's hull 10 at the 10% front position from the after perpendicular A. P. to the hull length (length between perpendicular) L.P.P.

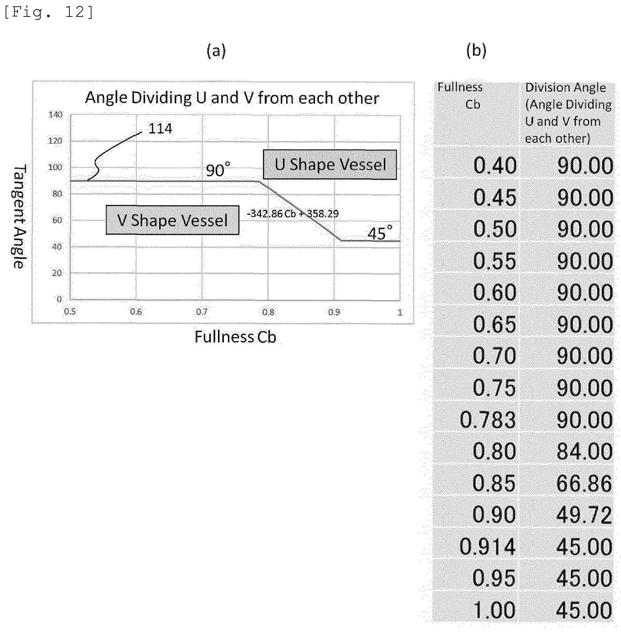

Figs. 12(a) and 12(b) show a relation between the fullness Cb of the ship's hull 10 and the division angle (angle dividing V shape vessel and U shape vessel from each other) .

In Fig. 12(a), the V shaped stern (V shape vessel) is defined that the tangent angles θ₁ and θ₂ formed between the fullness Cb of the ship's hull 10 and the tangent between the ship's hull 10 and the horizontal line 111 which passes through the propeller axis (axis) 21 of the ship's hull 10 at a 10% front position of the hull length (length between perpendicular) L.P.P. from the after perpendicular A.P. is a line 114 or less. When the fullness Cb is 0.783 or less, a stern having the tangent angle of 90° or less which is the division angle corresponds to the V shaped stern. In a range where the fullness Cb exceeds 0.783 and less than 0.914, a stern having a numeric value obtained by the division angle = -342.86Cb+358.29 which is a division angle or less corresponds to the V shaped stern. When the fullness Cb is 0.914 or more, a stern having the division angle of 45° or less corresponds to the V shaped stern. Numeric values in Fig. 12(b) and Table 1 are for more easily distinguishing the relation between the fullness and the V shape vessel and U shape vessel. In the actual case, the fullness Cb and the division angle may be values existing between the numeric values.

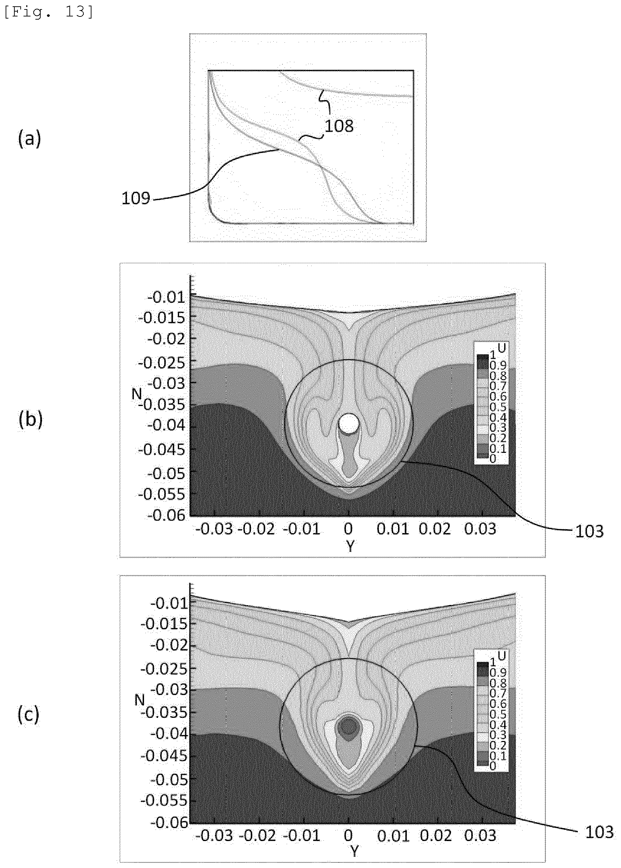

Figs. 13 are a diagram of the stern and contour diagrams showing wakes of the U shape vessel and the V shape vessel.

The fullness Cb of the U shape vessel in Fig.13 is 0.87, and the tangent angle is 75°. The fullness Cb of the V shape vessel is 0.87, and the tangent angle is 40°.

Fig. 13(a) is a stern diagram on the port-side, Fig. 13(b) shows the wake of the U shape vessel (line 108), and Fig. 13 (c) shows the wake of the V shape vessel (line 109). In Figs. 13 (b) and 13(c), the numeric values are nondimensionized at ship speed, and U=1.0 is the ship speed. The length is nondimensionized such that the length between the perpendicular (hull length) L.P.P. becomes 1.0.

Here, "wake" is a wake flow of the ship's hull 10. Normally, the flow becomes slow due to influence of the ship's hull 10. As shown in Fig. 13 (b), in the U shape vessel, vertical vortex flowing around the longitudinal direction of the vessel is formed. In the V shape vessel where vertical vortex flowing around the longitudinal direction of the vessel is not formed, it is preferable that the width W of the parallel part 33 is set within a predetermined range.

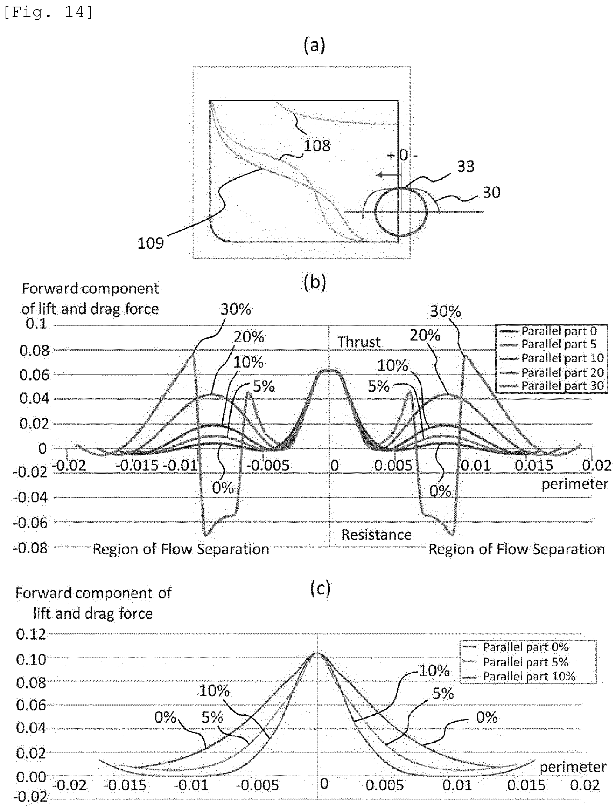

Figs. 14 show a thrust per a width W of the parallel part. Fig. 14(b) shows a distribution of a thrust direction component of the ship's hull of a force induced by the stern duct 30 respectively when the width W of the parallel part 33 of the stern duct 30 is 0%, 5%, 10%, 20% and 30% in the V shape vessel (fullness Cb of 0.87 and tangent angle of 40°). Fig. 14 (c) shows a distribution of a thrust direction component of the ship's hull of a force induced by the stern duct 30 respectively when the width W of the parallel part 33 of the stern duct 30 is 0%, 5% and 10% of the diameter Dp of the propeller 20 in the U shape vessel (fullness Cb of 0.87 and tangent angle of 75°) .

In Figs. 14(b) and 14(c), the lateral axis shows a distance from an upper of the stern duct 30. As shown in Figs. 14(a) and 14(c), values respectively up to left and right 90° are calculated, and terminal positions differ depending upon the sizes of the parallel part 33. A distance from this upper end is nondimensionized with the hull length L.P.P. The vertical axis shows a thrust direction component of the ship's hull of a vector sum of a thrust and drag induced by the stern duct 30 due to blade element flow and this is a value obtained by dividing the force by square of density of water and the hull length L.P.P. More specifically, this is a value obtained by multiplying a nondimensional lift force coefficient (CL) and a drag coefficient (CD) by square of nondimensional speed U.

Under the calculation conditions, a distance between the rear edge 32 of the stern duct 30 and the front edge of the propeller 20 is 10% of the diameter Dp of the propeller 20, a diameter of the rear edge 32 of the stern duct 30 is 60% of the diameter Dp of the propeller 20, and an opening angle of the duct is 12° in the case of the V shape vessel and 10° in the case of the U shape vessel. A wing cord length L₁ of the stern duct 30 is 25% of the diameter Dp of the propeller 20 in the case of the V shape vessel, and is 30% of the diameter Dp of the propeller 20 in the case of the U shape vessel.

From Fig. 14, it is found that in the V shape vessel, more thrust is generated when the width W of the parallel part 33 is 20% of the diameter Dp of the propeller 20 as compared with other cases . If the width W of the parallel part 33 becomes 30%, a portion where the thrust direction component of the ship's hull becomes minus is generated, and this is ascribable to the fact that separation is generated in a flow.

From Fig. 14 (c), it is found that in the U shape vessel, more thrust is generated when the parallel part 33 is 0% of the diameter Dp of the propeller 20 as compared with other cases. From this point, it can be said that in the case of the U shape vessel, it is advantageous on the contrary not to provide the parallel part 33 in terms of the thrust of the ship's hull.

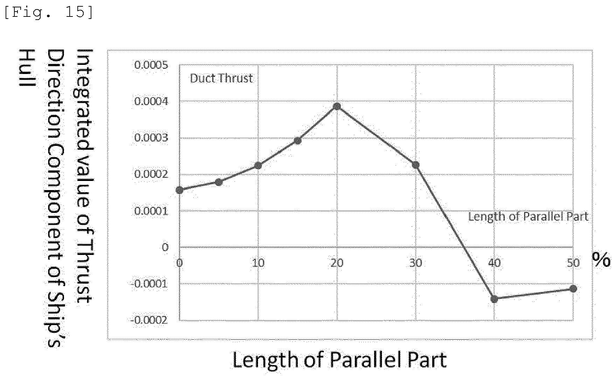

Fig. 15 shows results of integration of the thrust direction component of the ship's hull per a width W of the parallel part 33. In Fig. 15, widths W of the parallel part 33 which are 40% and 50% of the diameter Dp of the propeller 20 are further added. When the width W of the parallel part 33 is 30%, a portion where the thrust direction component of the ship's hull becomes minus is generated, but integrated values are still plus. However, since separation differs also depending upon conditions other than the widths W of the parallel part 33 (bumps and dips of inner surface of stern duct 30 and direction of flow line), it is preferable that the upper limit of the width W of the parallel part 33 is set small with a margin, and is set to 25%.

Further, if construction costs and the like of the stern shape having the stern duct of the embodiment is taken into consideration in terms of the transport efficiency, it is preferable that an integrated value of the thrust direction component of the ship's hull is about 0.0018, and it is preferable that a lower limit of the width W of the parallel part 33 is about 5% of the diameter Dp of the propeller 20.

Therefore, in the case of the V shape vessel where a vertical vortex formed around the vessel longitudinal direction is not formed, it is preferable that the width W of the parallel part 33 is 5% or more and 25% or less, it is more preferable that the width W of the parallel part 33 is 5% or more and 20% or less where an integrated value of the thrust direction component of the ship's hull is monotonously increasing, and it is further preferable that the width W of the parallel part is 10% or more and 20% or less where the integrated value of the thrust direction component of the ship's hull becomes large to a certain extent.

As described above, the V shape vessel is ascertained from the fullness Cb of the ship's hull 10 and from the division angle as the shape of the ship's hull, and the width W in the horizontal lateral direction of the parallel part 33 of the duct body 31 is appropriately set while taking the relation with respect to the diameter Dp of the propeller 20 into consideration. According to this, it is possible to obtain the shape of the stern capable of obtaining the high transport efficiency.

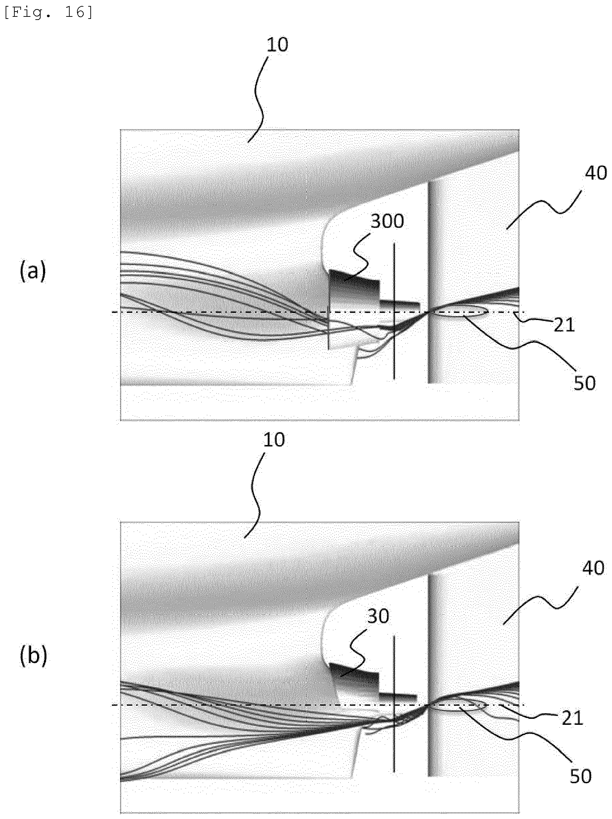

Figs. 16 are drawings in which flow lines flowing into the energy-saving appendage are compared with each other. Fig. 16(a) shows a case where a conventional annular duct 300 is applied, and Fig. 16(b) shows a case where the stern duct 30 of the embodiment is applied. Both Figs. 16(a) and 16(b) use a V shape vessel as the ship's hull.

The rudder 40 includes an energy-saving appendage 50 such as a post-swirl type energy-saving apparatus which thrusts the ship's hull 10 forward. The energy-saving appendage 50 is a fin for example. A mounting position of the energy-saving appendage 50 on the rudder 40 in the vertical direction is substantially at the same level as a boss position of the propeller 20 where a thrust force can easily be obtained. It is possible to achieve high propulsion efficiency by the energy-saving appendage 50, and to further enhance the transport efficiency.

When the stern duct 30 is applied (Fig. 16(b)), as compared with a case where the conventional annular duct 300 is applied (Fig. 16(a)), a strong ascending flow from a ship's bottom which is necessary to exert an effect of the energy-saving appendage 50 which is placed on the rudder 40 is induced. This point can be understood also from a point that the left flow line of the stern duct 30 becomes dense toward the axis (propeller axis) 21 in Fig. 16(b).

The mounting position of the energy-saving appendage 50 on the rudder 40 in the longitudinal direction is substantially at the same level as the boss position of the propeller 20. Therefore, if the duct body lower end 36 of the stern duct 30 is set lower than the axis of the propeller 20 and higher than the axial lower end 23 of the propeller 20, it is possible to preferably introduce the flow line toward the energy-saving appendage 50.

Since the stern duct 30 and the energy-saving appendage 50 are congenial and a synergy effect is exhibited in this manner, the transport efficiency can further be enhanced by the combination.

As the energy-saving appendage, it is possible to employ various shapes in addition to the fin-shaped energy-saving appendage 50.

### [INDUSTRIAL APPLICABILITY]

According to the stern shape and the vessel having the stern duct of the present invention, it is possible to obtain the maximum transport efficiency by the effect of interference between the shape of the ship's hull and the propeller due to the shape of the stern having the duct in front of the propeller.

The present invention can be applied not only to a single-axe ship but also a two-axe ship, a monohull ship, a twin hull ship and a multihull ship.

### [EXPLANATION OF SYMBOLS]

10 ship's hull
15 stern portion
20 propeller
21 axis (propeller axis)
24 stern tube rear edge
30 stern duct
31 duct body
32 rear edge
33 parallel part
35 strut portion
35A left strut portion
35B right strut portion
36 duct body lower end
40 rudder
50 energy-saving appendage
A. P. after perpendicular
Cb fullness
Dp diameter of propeller
L₁ upper wing cord length
L₂ lower wing cord length
L₃ distance between duct body rear edge and front edge of propeller
L. P. P. hull length (length between perpendicular)
R radius of propeller
W width
θ₁, θ₂ tangent angle

## Claims

1. A stern shape having a stern duct (30), comprising a propeller (20) provided on a stern portion (15) of a ship's hull (10), and the stern duct (30) mounted in front of the propeller (20), wherein the ship's hull (10) has a V stern shape, a duct body (31) of the stern duct (30) is semicylindrical in shape, a rear edge (32) of the duct body (31) has a shape including a parallel part (33) at a central position of its upper portion from which a semicircle substantially centering on an axis (21) of the propeller (20) is offset toward both left and right sides when the ship's hull (10) is forwardly viewed from a rear portion thereof, an inner radius of the semicircle is set in a range of 40% or more and 80% or less of a radius (R) of the propeller (20), a width (W) of the parallel part (33) in a lateral horizontal direction is set to 5% or more and 25% or less of a diameter (Dₚ) of the propeller (20).

2. The stern shape having a stern duct (30) according to claim 1, wherein the V shaped stern has such a shape that a tangent angle formed between a tangent of the ship's hull (10) and a horizontal line which passes through the axis (21) of the propeller (20) of the ship's hull (10) at a 10% front position of the hull length from the after perpendicular (A.P) is a division angle or less which is defined per a fullness (Cb) of the ship's hull (10).

3. The stern shape having a stern duct (30) according to claim 2, wherein the division angle is determined based on the following Table which prescribes a ship shape having the V stern shape:
| Fullness | Division Angle |
|---|---|
| 0.40 | 90.00 |
| 0.45 | 90.00 |
| 0.50 | 90.00 |
| 0.55 | 90.00 |
| 0.60 | 90.00 |
| 0.65 | 90.00 |
| 0.70 | 90.00 |
| 0.75 | 90.00 |
| 0.783 | 90.00 |
| 0.80 | 84.00 |
| 0.85 | 66.86 |
| 0.90 | 49.72 |
| 0.914 | 45.00 |
| 0.95 | 45.00 |
| 1.00 | 45.00 |

4. The stern shape having a stern duct (30) according to any one of claims 1 to 3, wherein a distance (L₃) between the rear edge (32) of the duct body (31) and a front edge of the propeller (20) is set to 1.0% or more and less than 50% of a diameter (Dₚ) of the propeller (20).

5. The stern shape having a stern duct (30) according to any one of claims 1 to 4, wherein a lower end of the duct body (31) is set lower than the axis (21) of the propeller (20) and higher than an axial lower end (23) of the propeller (20).

6. The stern shape having a stern duct (30) according to any one of claims 1 to 5, wherein a horizontal distance in a longitudinal direction of the ship's hull (10) between a lower portion of the rear edge (32) of the duct body (31) and a rear edge (24) of the stern tube of the ship's hull (10) is set into a range from -15% or more to less than 50% of a diameter (Dₚ) of the propeller (20) under a condition that the horizontal distance is a positive value when the rear edge (32) of the duct body (31) exists in front of the ship's hull (10).

7. The stern shape having a stern duct (30) according to any one of claims 1 to 6, wherein the duct body (31) is trapezoidal in shape whose upper bottom is longer than its lower bottom when the duct body (31) is viewed from side.

8. The stern shape having a stern duct (30) according to claim 7, wherein a cross section of the duct body (31) has a wing shape, a wing cord length of the wing shape is set such that a lower portion of the duct body (31) is shorter than its upper portion.

9. The stern shape having a stern duct (30) according to 8, wherein a ratio the wing cord length of the lower portion (L₂) of the duct body (31) to the wing cord length of the upper portion (L₁) is set to 1/2 or more and less than 1.

10. The stern shape having a stern duct (30) according to any one of claims 1 to 9, wherein the inner radius of the semicylindrical is set such that a front portion of the duct body (31) is larger than a rear portion of the duct body (31).

11. The stern shape having a stern duct (30) according to any one of claims 1 to 10, wherein a lower end part of the duct body (31) is provided with strut portions (35) which support the duct body (31) on the stern portion (15).

12. The stern shape having a stern duct (30) according to claim 11, wherein angles of the left and right strut portions (35A, 35B) are made different from each other such that the strut portions (35) induce a flow moving in a direction opposite from a rotation direction of the propeller (20).

13. The stern shape having a stern duct (30) according to any one of claims 1 to 12, further comprising a rudder (40) behind the propeller (20), wherein the rudder (40) is provided with an energy-saving appendage (50), which thrusts the ship's hull (10) forward.

14. The stern shape having a stern duct (30) according to claim 13, wherein a mounting position of the energy-saving appendage (50) on the rudder (40) in the longitudinal direction is substantially at the same level as a boss position of the propeller (20).

15. A vessel having the ship's hull (10) provided with a stern shape including the stern duct (30) according to any one of claims 1 to 14.

## Patentansprüche

1. Heckform mit einer Zustromdüse (30), umfassend einen Propeller (20), der an einem Heckabschnitt (15) eines Schiffsrumpfes (10) vorgesehen ist, und wobei die Zustromdüse (30) vor dem Propeller (20) angebracht ist, wobei der Schiffsrumpf (10) ein V-förmiges Heck aufweist, ein Düsenkörper (31) der Zustromdüse (30) eine semizylindrische Form aufweist, eine Hinterkante (32) des Düsenkörpers (31) eine Form mit einem parallelen Teil (33) an einer mittigen Position seines oberen Abschnittes aufweist, von welcher ein sich im Wesentlichen um eine Achse (21) des Propellers (20) drehender Halbkreis, bei Betrachtung des Schiffsrumpfes (10) nach vorne von dessen hinterem Abschnitt aus, sowohl zur linken als auch zur rechten Seite hin versetzt ist, ein Innenradius des Halbkreises in einem Bereich von mindestens 40% und höchstens 80% eines Radius (R) des Propellers (20) festgelegt ist, eine Breite (W) des parallelen Teils (33) in einer seitlichen horizontalen Richtung auf mindestens 5% und höchstens 25% eines Durchmessers (D_{P}) des Propellers (20) festgelegt ist.

2. Heckform mit einer Zustromdüse (30) nach Anspruch 1, wobei das V-förmige Heck eine derartige Form aufweist, dass ein Tangenswinkel, der zwischen einer Tangente des Schiffsrumpfes (10) und einer horizontalen Linie gebildet ist, welche durch die Achse (21) des Propellers (20) des Schiffsrumpfes (10) in einer 10% Frontposition der Rumpflänge von der Achterlotrechten (A.P) verläuft, ein Teilungswinkel oder weniger ist, der durch einen Füllgrad (Cb) des Schiffsrumpfes (10) definiert ist.

3. Heckform mit einer Zustromdüse (30) nach Anspruch 2, wobei der Teilungswinkel auf der Basis der nachfolgenden Tabelle bestimmt wird, welche eine Schiffsform mit dem V-förmigen Heck vorgibt:
| Füllgrad | Teilungswinkel |
|---|---|
| 0,40 | 90,00 |
| 0,45 | 90,00 |
| 0,50 | 90,00 |
| 0,55 | 90,00 |
| 0,60 | 90,00 |
| 0,65 | 90,00 |
| 0,70 | 90,00 |
| 0,75 | 90,00 |
| 0,783 | 90,00 |
| 0,80 | 84,00 |
| 0,85 | 66,86 |
| 0,90 | 49,72 |
| 0,914 | 45,00 |
| 0,95 | 45,00 |
| 1,00 | 45,00 |

4. Heckform mit eine Zustromdüse (30) nach einem der Ansprüche 1 bis 3, wobei ein Abstand (L₃) zwischen der Hinterkante (32) des Düsenkörpers (31) und einer Vorderkante des Propellers (20) auf mindestens 1,0% und weniger als 50% eines Durchmessers (D_{P}) des Propellers (20) festgelegt ist.

5. Heckform mit einer Zustromdüse (30) nach einem der Ansprüche 1 bis 4, wobei ein unteres Ende des Düsenkörpers (31) niedriger als die Achse (21) des Propellers (20) und höher als ein axiales unteres Ende (23) des Propellers (20) festgelegt ist.

6. Heckform mit einer Zustromdüse (30) nach einem der Ansprüche 1 bis 5, wobei ein horizontaler Abstand in einer Längsrichtung des Schiffsrumpfes (10) zwischen einem unteren Abschnitt der Hinterkante (32) des Düsenkörpers (31) und einer Hinterkante (24) des Stevenrohres des Schiffsrumpfes (10) in einem Bereich von mindestens -15% bis weniger als 50% eines Durchmessers (D_{P}) des Propellers (20) unter einer Bedingung festgelegt ist, dass der horizontale Abstand ein positiver Wert ist, wenn die Hinterkante (32) des Düsenkörpers (31) vor dem Schiffsrumpf (10) vorliegt.

7. Heckform mit einer Zustromdüse (30) nach einem der Ansprüche 1 bis 6, wobei der Düsenkörper (31) eine Trapezform aufweist, deren oberer Boden bei seitlicher Betrachtung des Düsenkörpers (30) länger als ihr unterer Boden ist.

8. Heckform mit einer Zustromdüse (30) nach Anspruch 7, wobei ein Querschnitt des Düsenkörpers (31) eine Flügelform aufweist, wobei eine Flügelsehnenlänge der Flügelform derart festgelegt ist, dass ein unterer Abschnitt des Düsenkörpers (31) kürzer als sein oberer Abschnitt ist.

9. Heckform mit einer Zustromdüse (30) nach Anspruch 8, wobei ein Verhältnis der Flügelsehnenlänge des unteren Abschnittes (L₂) des Düsenkörpers (31) zu der Flügelsehnenlänge des oberen Abschnittes (L₁) auf mindestens ½ und weniger als 1 festgelegt ist.

10. Heckform mit einer Zustromdüse (30) nach einem der Ansprüche 1 bis 9, wobei der Innenradius des Semizylinders derart festgelegt ist, dass ein vorderer Abschnitt des Düsenkörpers (31) größer als ein hinterer Abschnitt des Düsenkörpers (31) ist.

11. Heckform mit einer Zustromdüse (30) nach einem der Ansprüche 1 bis 10, wobei ein unterer Endteil des Düsenkörpers (31) mit Verstrebungsabschnitten (35) versehen ist, welche den Düsenkörper (31) auf dem Heckabschnitt (15) abstützen.

12. Heckform mit einer Zustromdüse (30) nach Anspruch 11, wobei Winkel der linken und rechten Verstrebungsabschnitte (35A, 35B) unterschiedlich voneinander ausgeführt sind, so dass die Verstrebungsabschnitte (35) eine sich in eine Richtung entgegengesetzt zu einer Drehrichtung des Propellers (20) bewegende Strömung hervorrufen.

13. Heckform mit einer Zustromdüse (30) nach einem der Ansprüche 1 bis 12, weiterhin umfassend ein Steuerruder (40) hinter dem Propeller (20), wobei das Steuerruder (40) mit einem energiesparenden Anhang (50) versehen ist, welcher den Schiffsrumpf (10) nach vorne schiebt.

14. Heckform mit einer Zustromdüse (30) nach Anspruch 13, wobei sich eine Befestigungsposition des energiesparenden Anhangs (50) an dem Steuerruder (40) in Längsrichtung im Wesentlichen auf derselben Ebene wie eine Nabenposition des Propellers (20) befindet.

15. Schiff mit dem Schiffsrumpf (10), welcher mit einer Heckform mit der Zustromdüse (30) nach einem der Ansprüche 1 bis 14 versehen ist.

## Revendications

1. Forme de poupe ayant un carénage de poupe (30), comportant une hélice (20) agencée sur une portion de poupe (15) d'une coque de navire (10), et le carénage de poupe (30) monté devant l'hélice (20), dans laquelle la coque (10) du navire a une forme de poupe en V, un corps de carénage (31) du carénage de poupe (30) a une forme semi-cylindrique, un bord arrière (32) du corps de carénage (31) a une forme incluant une partie parallèle (33) à une position centrale de sa portion supérieure par rapport à laquelle un demi-cercle sensiblement centré sur un axe (21) de l'hélice (20) est décalé vers les deux côtés gauche et droit lorsque la coque (10) du navire est vue vers l'avant depuis une portion arrière de celle-ci, un rayon intérieur du demi-cercle est défini dans une plage de 40 % ou plus et 80 % ou moins d'un rayon (R) de l'hélice (20), une largeur (W) de la partie parallèle (33) dans une direction horizontale latérale est fixée à 5 % ou plus et 25 % ou moins d'un diamètre (Dₚ) de l'hélice (20).

2. Forme de poupe ayant un carénage de poupe (30) selon la revendication 1, dans laquelle la poupe en forme de V a une forme telle qu'un angle de tangente formé entre une tangente de la coque (10) du navire et une ligne horizontale qui passe par l'axe (21) de l'hélice (20) de la coque (10) du navire à une position avant à 10 % de la longueur de coque par rapport à la perpendiculaire arrière (A.P) est un angle de division ou moins qui est défini par un remplissage (Cb) de la coque (10) du navire.

3. Forme de poupe ayant un carénage de poupe (30) selon la revendication 2, dans laquelle l'angle de division est déterminé sur la base du tableau suivant qui prescrit une forme de navire ayant la forme de poupe en V :
| Remplissage | Angle de division |
|---|---|
| 0,40 | 90,00 |
| 0,45 | 90,00 |
| 0,50 | 90,00 |
| 0,55 | 90,00 |
| 0,60 | 90,00 |
| 0,65 | 90,00 |
| 0,70 | 90,00 |
| 0,75 | 90,00 |
| 0,783 | 90,00 |
| 0,80 | 84,00 |
| 0,85 | 66,86 |
| 0,90 | 49,72 |
| 0,914 | 45,00 |
| 0,95 | 45,00 |
| 1,00 | 45,00 |

4. Forme de poupe ayant un carénage de poupe (30) selon l'une quelconque des revendications 1 à 3, dans laquelle une distance (L₃) entre le bord arrière (32) du corps de carénage (31) et un bord avant de l'hélice (20) est fixée à 1,0 % ou plus et moins de 50 % d'un diamètre (Dₚ) de l'hélice (20).

5. Forme de poupe ayant un carénage de poupe (30) selon l'une quelconque des revendications 1 à 4, dans laquelle une extrémité inférieure du corps de carénage (31) est définie plus basse que l'axe (21) de l'hélice (20) et plus haute qu'une extrémité inférieure axiale (23) de l'hélice (20) .

6. Forme de poupe ayant un carénage de poupe (30) selon l'une quelconque des revendications 1 à 5, dans laquelle une distance horizontale dans une direction longitudinale de la coque (10) du navire entre une portion inférieure du bord arrière (32) du corps de carénage (31) et un bord arrière (24) du tube d'étambot de la coque (10) du navire est fixée dans une plage de -15 % ou plus jusqu'à moins de 50 % d'un diamètre (Dₚ) de l'hélice (20) à condition que la distance horizontale soit une valeur positive lorsque le bord arrière (32) du corps de carénage (31) existe à l'avant de la coque (10) du navire.

7. Forme de poupe ayant un carénage de poupe (30) selon l'une quelconque des revendications 1 à 6, dans laquelle le corps de carénage (31) a une forme trapézoïdale dont le fond supérieur est plus long que son fond inférieur lorsque le corps de carénage (31) est vu de côté.

8. Forme de poupe ayant un carénage de poupe (30) selon la revendication 7, dans laquelle une section transversale du corps de carénage (31) a une forme d'aile, une longueur de corde d'aile de la forme d'aile étant fixée de telle sorte qu'une portion inférieure du corps de carénage (31) est plus courte que sa portion supérieure.

9. Forme de poupe ayant un carénage de poupe (30) selon la revendication 8, dans laquelle un rapport de la longueur de corde d'aile de la portion inférieure (L₂) du corps de carénage (31) sur la longueur de corde d'aile de la portion supérieure (L₁) est fixé à ½ ou plus et inférieur à 1.

10. Forme de poupe ayant un carénage de poupe (30) selon l'une quelconque des revendications 1 à 9, dans laquelle le rayon intérieur du semi-cylindre est défini de telle sorte qu'une portion avant du corps de carénage (31) est plus grande qu'une portion arrière du corps de carénage (31).

11. Forme de poupe ayant un carénage de poupe (30) selon l'une quelconque des revendications 1 à 10, dans laquelle une partie d'extrémité inférieure du corps de carénage (31) est pourvue de portions d'entretoise (35) qui supportent le corps de carénage (31) sur la portion de poupe (15).

12. Forme de poupe ayant un carénage de poupe (30) selon la revendication 11, dans laquelle des angles des portions d'entretoise gauche et droite (35A, 35B) sont formés différents l'un de l'autre de telle sorte que les portions d'entretoise (35) induisent un écoulement en mouvement dans une direction opposée par rapport à un sens de rotation de l'hélice (20).

13. Forme de poupe ayant un carénage de poupe (30) selon l'une quelconque des revendications 1 à 12, comportant en outre un gouvernail (40) derrière l'hélice (20), dans laquelle le gouvernail (40) est pourvu d'un appendice d'économie d'énergie (50), qui pousse la coque (10) du navire vers l'avant.

14. Forme de poupe ayant un carénage de poupe (30) selon la revendication 13, dans laquelle une position de montage de l'appendice d'économie d'énergie (50) sur le gouvernail (40) dans la direction longitudinale est sensiblement au même niveau qu'une position de bossage de l'hélice (20).

15. Bâtiment dont la coque de navire (10) est pourvue d'une forme de poupe incluant le carénage de poupe (30) selon l'une quelconque des revendications 1 à 14.
